# EUROPEAN PATENT APPLICATION

(11) **EP 4 614 530 A1**
(43) Date of publication of application: **10.09.2025**
(21) Application number: 23885693.4
(22) Date of filing: 27.10.2023
(51) Int. Cl.: H01B 13/00, C01B 25/14, H01M 10/052, H01M 10/0562

(54) **METHOD FOR PRODUCING SULFIDE SOLID ELECTROLYTE AND APPARATUS FOR PRODUCING SULFIDE SOLID ELECTROLYTE**

(30) Priority: 02.11.2022 JP 2022176672
(71) Applicant: AGC INC., Chiyoda-ku, Tokyo 1008405 (JP)
(72) Inventor: OMORI, Norifumi, Tokyo 100-8405 (JP); FUJII, Naoki, Tokyo 100-8405 (JP)
(74) Representative: Müller-Boré & Partner Patentanwälte PartG mbB
(86) International application number: PCT/JP2023/039004
(87) International publication number: WO 2024/095937

(57) **Abstract**

The present invention addresses the problem of providing a method for producing a sulfide solid electrolyte, the method being capable of stably and continuously producing a sulfide solid electrolyte. The present invention has solved the above problem by a production method wherein a sulfide solid electrolyte starting material is supplied into a furnace body 10, the sulfide solid electrolyte starting material is heated and melted, and a thus-obtained melt 11 is cooled by being discharged to the outside of the furnace body 10 through a heated flow channel 12.

## Description

### TECHNICAL FIELD

The present invention relates to a method for producing a sulfide solid electrolyte and an apparatus for producing a sulfide solid electrolyte.

### BACKGROUND ART

Lithium-ion secondary batteries are widely used in portable electronic devices such as mobile phones and laptop computers. In the related art, a liquid electrolyte has been used in a lithium-ion secondary battery. On the other hand, attention has been paid to an all-solid-state lithium-ion secondary battery in which a solid electrolyte is used as an electrolyte of a lithium-ion secondary battery in recent years, from the viewpoint of improving safety, charging and discharging at a high speed, and reducing the size of a case.

Examples of the solid electrolyte used in the all-solid-state lithium-ion secondary battery include a sulfide solid electrolyte.

Examples of a method for synthesizing a sulfide solid electrolyte include a method in which a sulfide solid electrolyte raw material is heated and melted to prepare a melt, and the melt is cooled and solidified. However, there is a problem that gaseous volatile components generated from the melt during the cooling and solidification aggregate and inhibit stable production. In particular, in a production method in which a sulfide solid electrolyte raw material is continuously supplied into a furnace, and an obtained melt is continuously discharged and cooled and solidified, there is a problem that the melt aggregates in the vicinity of a discharge outlet, and stable production is inhibited.

Patent Literature 1 discloses a method for producing a sulfide lithium-ion conductive solid electrolyte, which includes mixing constituent compounds of the sulfide lithium-ion conductive solid electrolyte in a predetermined stoichiometric mixture ratio and heating and melting the mixture under an excess of sulfur.

Further, Patent Literature 2 discloses a method for producing a lithium-ion conductive material, which includes (1) a step of melting and vitrifying a composite compound containing lithium, phosphorus, and sulfur as a composition, and (2) a step of obtaining a sulfide glass by rapidly cooling the molten glass.

Furthermore, Patent Literature 3 discloses a method for producing a solid electrolyte glass by compressing a raw material feeding portion, heating and melting a raw material, cooling a melt, and continuously discharging the melt.

### CITATION LIST

### PATENT LITERATURE

Patent Literature 1: JP3284215B
Patent Literature 2: JP2012-43654A
Patent Literature 3: JP5640665B

### SUMMARY OF INVENTION

### TECHNICAL PROBLEM

However, the techniques disclosed in Patent Literatures 1 and 2 cannot prevent generation of a gas from the melt, and cannot sufficiently solve the problem caused by an aggregation of the gas. In the technique disclosed in Patent Literature 3, a structure of an apparatus is complicated, a flow path is easily solidified and blocked when the raw material is cooled, and it is difficult to control the entire apparatus.

Therefore, an object of the present invention is to provide a method and an apparatus for producing a sulfide solid electrolyte which solve the above problems caused by an aggregation of a gas generated from a melt of a sulfide solid electrolyte raw material and can stably and continuously produce the sulfide solid electrolyte.

### SOLUTION TO PROBLEM

As a result of intensive studies, the present inventors have found that the above problems can be solved by heating a flow path used for discharging a melt of a sulfide solid electrolyte raw material when the melt is discharged from a furnace, and have completed the present invention.

That is, the present invention relates to the following [1] to [12].
[1] A method for producing a sulfide solid electrolyte, the method including:
   supplying a sulfide solid electrolyte raw material into a furnace;
   heating and melting the sulfide solid electrolyte raw material; and
   discharging an obtained melt to an outside of the furnace through a heated flow path to perform cooling.
[2] The method for producing a sulfide solid electrolyte according to [1], in which the flow path includes a throttle portion.
[3] The method for producing a sulfide solid electrolyte according to [2], in which a shape of the throttle portion is a nozzle shape.
[4] The method for producing a sulfide solid electrolyte according to [1] or [2], in which a heat insulating layer is provided between the furnace and the flow path.
[5] The method for producing a sulfide solid electrolyte according to [1] or [2], in which a heating temperature of the flow path is 500°C or higher.
[6] The method for producing a sulfide solid electrolyte according to [1] or [2], in which the supply of the sulfide solid electrolyte raw material into the furnace and the discharge of the melt to the outside of the furnace are continuously performed.
[7] The method for producing a sulfide solid electrolyte according to [1] or [2], in which the cooling is performed by a twin roll process.
[8] The method for producing a sulfide solid electrolyte according to [1] or [2], in which the cooling is performed by a gas atomizing method.
[9] An apparatus for producing a sulfide solid electrolyte, the apparatus including:
   a furnace configured to heat and melt a sulfide solid electrolyte raw material; and
   a flow path through which a melt obtained by the heating and melting is discharged to an outside of the furnace,
   in which the flow path includes a heating portion configured to heat the flow path, and a cooling portion configured to cool the melt in a vicinity of a downstream end portion of the flow path.
[10] The apparatus for producing a sulfide solid electrolyte according to [9], in which the flow path includes a throttle portion.
[11] The apparatus for producing a sulfide solid electrolyte according to [10], in which a shape of the throttle portion is a nozzle shape.
[12] The apparatus for producing a sulfide solid electrolyte according to [9] to [11], in which a heat insulating layer is provided between the furnace and the flow path.

### ADVANTAGEOUS EFFECTS OF INVENTION

According to the present invention, it is possible to provide a method and an apparatus for producing a sulfide solid electrolyte in which by heating a flow path used for discharging a melt of a sulfide solid electrolyte raw material when the melt is discharged from a furnace, gas generated from the melt is prevented, the above-described problem caused by an aggregation derived from the gas is solved, and the sulfide solid electrolyte can be stably and continuously produced.

### BRIEF DESCRIPTION OF DRAWINGS

FIG. 1 is a flowchart of a method for producing a sulfide solid electrolyte according to an embodiment of the present invention.
FIG. 2 is a schematic cross-sectional view showing an example of an apparatus for producing a sulfide solid electrolyte according to the embodiment of the present invention.
FIG. 3 is a schematic cross-sectional view showing another example of the apparatus for producing a sulfide solid electrolyte according to the embodiment of the present invention.
FIG. 4 is a schematic cross-sectional view showing another example of the apparatus for producing a sulfide solid electrolyte according to the embodiment of the present invention.
FIG. 5 is a schematic cross-sectional view showing an apparatus for producing a sulfide solid electrolyte used in Comparative Example.

### DESCRIPTION OF EMBODIMENTS

Hereinafter, the present invention is described in detail, but the present invention is not limited to the following embodiment and can be freely modified and implemented without departing from the gist of the present invention. In addition, "to" indicating a numerical range is used to include numerical values written before and after it as a lower limit value and an upper limit value. In the present specification, "mass" is synonymous with "weight". In the following drawings, members and portions having the same functions may be denoted by the same reference numerals, and duplicate descriptions may be omitted or simplified. Embodiments described in the drawings are schematically for the purpose of clearly illustrating the present invention, and do not necessarily accurately represent a size or a scale of an actual apparatus.

### <Method for Producing Sulfide Solid Electrolyte>

A method for producing a sulfide solid electrolyte according to an embodiment of the present invention (hereinafter, also referred to as the present production method) includes: supplying a sulfide solid electrolyte raw material into a furnace, heating and melting the sulfide solid electrolyte raw material, and discharging an obtained melt to an outside of the furnace through a heated flow path to cool the melt.

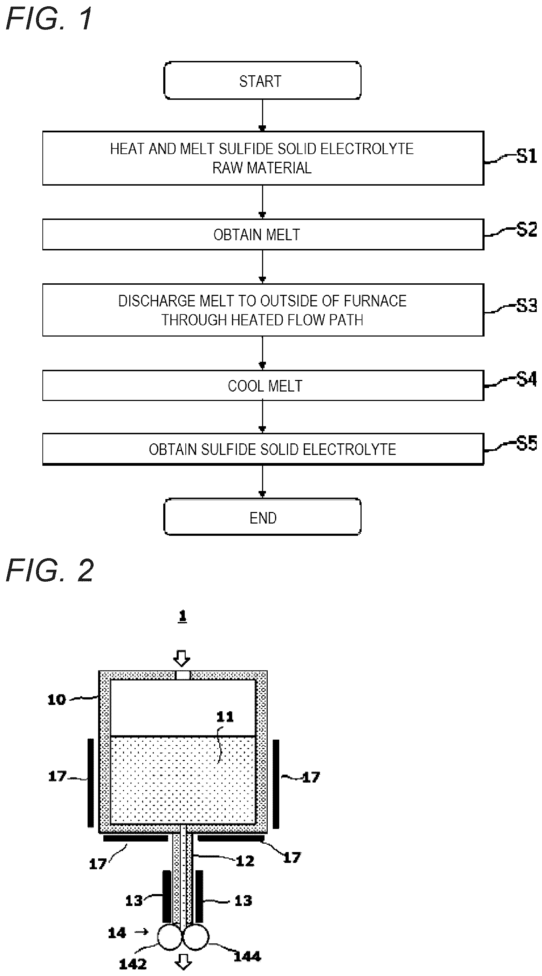

FIG. 1 shows a flowchart of the present production method. In the present production method, first, the sulfide solid electrolyte raw material is heated and melted in the furnace (step S1) to obtain the melt (step S2). The obtained melt is discharged to the outside of the furnace through the heated flow path (step S3) and cooled (step S4) to obtain the sulfide solid electrolyte (step S5).

As the furnace, a known furnace which includes a heating portion and is used for heating and melting a solid electrolyte raw material in the related art can be appropriately used, and a material and a size of the furnace can be freely selected.

### (Sulfide Solid Electrolyte Raw Material)

In the present production method, various raw materials can be used as the sulfide solid electrolyte raw material (hereinafter sometimes referred to as the present raw material).

As the present raw material, a commercially available sulfide solid electrolyte raw material may be used, or a sulfide solid electrolyte raw material produced from a material may be used. These sulfide solid electrolyte raw materials may be further subjected to a known pretreatment. That is, the present production method may appropriately include a step of producing the present raw material or a step of subjecting the present raw material to a pretreatment.

The sulfide solid electrolyte raw material is specifically described below. The sulfide solid electrolyte raw material usually contains an alkali metal element (R) and sulfur element (S).

Examples of the alkali metal element (R) include lithium element (Li), sodium element (Na), and potassium element (K), and among these elements, the lithium element (Li) is preferable. As the alkali metal element (R), substances (components) containing an alkali metal element such as elemental alkali metal element and compounds containing an alkali metal element can be appropriately combined and used. As the lithium element, Li-containing substances (components), such as elemental Li and Li-containing compounds, can be appropriately combined and use.

Examples of a substance containing the lithium element (Li) include lithium compounds such as lithium sulfide (Li₂S), lithium iodide (LiI), lithium carbonate (Li₂CO₃), lithium sulfate (Li₂SO₄), lithium oxide (Li₂O), lithium nitride (Li₃N), and lithium hydroxide (LiOH), and metallic lithium. As the substance containing the lithium element (Li), from the viewpoint of obtaining a sulfide material, it is preferable to use lithium sulfide.

As the sulfur element (S), S-containing substances (components), such as elemental S and S-containing compounds, can be appropriately combined and used.

Examples of a substance containing the sulfur element (S) include phosphorus sulfides such as phosphorus trisulfide (P₂S₃) and phosphorus pentasulfide (P₂S₅), other sulfur compounds containing phosphorus, elemental sulfur, and a compound containing sulfur. Examples of the compound containing sulfur include H₂S, CS₂, Na₂S, iron sulfides (such as FeS, Fe₂S₃, FeS₂, Fe₁₋ₓS), bismuth sulfide (Bi₂S₃), antimony sulfide (Sb₂S₃), copper sulfides (such as CuS, Cu₂S, Cu₁₋ₓS), tin sulfide (SnS₂), and tungsten sulfide (WS₂). From the viewpoint of obtaining a sulfide material, the substance containing the sulfur element (S) is preferably phosphorus sulfide, and more preferably phosphorus pentasulfide (P₂S₅). These substances may be used alone or in combination of two or more kinds thereof. Phosphorus sulfide can be considered as a compound that serves as both the S-containing substance and a P-containing substance, which is described later.

From the viewpoint of improving an ionic conductivity and the like of the obtained sulfide solid electrolyte, it is preferable that the present raw material further contains a phosphorus element (P). As the phosphorus element (P), P-containing substances (components), such as elemental P and P-containing compounds, can be appropriately combined and used.

Examples of a substance containing the phosphorus element (P) include phosphorus sulfides such as phosphorus trisulfide (P₂S₃) and phosphorus pentasulfide (P₂S₅), phosphorus compounds such as sodium phosphate (Na₃PO₄), and elemental phosphorus. As the substance containing the phosphorus element (P), from the viewpoint of exerting the effect of the present invention more effectively, phosphorus sulfides having high volatility are preferable, and phosphorus pentasulfide (P₂S₅) is more preferable. These substances may be used alone or in combination of two or more kinds thereof.

The present raw material may be obtained as a mixed raw material by, for example, appropriately mixing the above-mentioned substances according to a composition of the desired sulfide solid electrolyte. A mixing ratio is not particularly limited, but for example, a molar ratio S/R of the sulfur element (S) to the alkali metal element (R) in the present raw material is preferably 0.65/0.35 or less, and more preferably 0.5/0.5 or less, from the viewpoint of improving the ionic conductivity and the like of the obtained sulfide solid electrolyte. The mixed raw material is preferably obtained by mixing the raw materials in a predetermined stoichiometric mixture ratio according to the materials used for the mixing. Examples of a mixing method include mixing in a mortar, mixing using a medium such as a planetary ball mill, and medium-less mixing such as a pin mill, a powder stirrer, and air flow mixing.

Examples of a preferred combination of the alkali metal element and the sulfur element contained in the present raw material include a combination of Li₂S and P₂S₅. When Li₂S and P₂S₅ are combined, a molar ratio Li/P of Li to P is preferably from 40/60 or more, and more preferably from 50/50 or more. The molar ratio Li/P of Li to P, is preferably 88/12 or less. The molar ratio Li/P of Li to P is preferably from 40/60 to 88/12, and more preferably from 50/50 to 88/12. By adjusting the mixing ratio so that an amount of P₂S₅ is relatively smaller than Li₂S, it becomes easier to prevent volatilization of sulfur and phosphorus components during a heating treatment due to a smaller boiling point of P₂S₅ compared to a melting point of Li₂S.

On the other hand, since lithium sulfide is expensive, a lithium compound other than lithium sulfide, metallic lithium, or the like may be used from the viewpoint of reducing a production cost of the sulfide solid electrolyte. Specifically, in this case, the present raw material preferably contains one or more selected from the group consisting of metallic lithium, lithium iodide (LiI), lithium carbonate (Li₂CO₃), lithium sulfate (Li₂SO₄), lithium oxide (Li₂O), and lithium hydroxide (LiOH) as the Li-containing substance. These substances may be used alone or in combination of two or more kinds thereof.

The present raw material may contain further substances (compounds) in addition to the above substances depending on the composition of the desired sulfide solid electrolyte or as additives.

For example, when producing a sulfide solid electrolyte containing a halogen element such as F, Cl, Br or I, the present raw material preferably contains a halogen element (Ha). In this case, the present raw material preferably contains a compound containing a halogen element. Examples of the compound containing a halogen element include lithium halide (LiHa) such as lithium fluoride (LiF), lithium chloride (LiCl), lithium bromide (LiBr), and lithium iodide (LiI), phosphorus halide, phosphoryl halide, sulfur halide, sodium halide such as sodium chloride (NaCl), barium halide such as barium fluoride (BaF₂), boron halide, yttrium halide such as yttrium chloride (YCl₃), indium halide such as indium chloride (InCl₃), zirconium halide such as zirconium chloride (ZrCl₄), and lanthanum halide such as lanthanum fluoride (LaF₂). As the compound containing a halogen element, lithium halide is preferable, and LiCl, LiBr, and LiI are more preferable, from the viewpoint of reactivity of the raw material. These compounds may be used alone or in combination of two or more kinds thereof.

An alkali metal halide such as lithium halide is also a compound containing an alkali metal element such as Li. When the present raw material contains an alkali metal halide, a part or all of the alkali metal element such as Li in the present raw material may be derived from the alkali metal halide such as lithium halide.

When the present raw material contains the halogen element (Ha) and the phosphorus element (P), a molar equivalent of Ha relative to P in the present raw material is preferably 0.2 molar equivalents or more, and more preferably 0.5 molar equivalents or more, from the viewpoint of improving the ionic conductivity and the like of the obtained sulfide solid electrolyte. From the viewpoint of stability of the obtained sulfide solid electrolyte, the molar equivalent of Ha is preferably 4 molar equivalents or less, and more preferably 3 molar equivalents or less.

The obtained sulfide solid electrolyte may be an amorphous sulfide solid electrolyte depending on a purpose, and from the viewpoint of improving ease of generation of an amorphous phase, it is also preferable that the present raw material contains sulfides such as SiS₂, B₂S₃, GeS₂, and Al₂S₃. By facilitating the generation of the amorphous phase, when the amorphous substance is obtained by rapid cooling, the amorphous sulfide solid electrolyte can be obtained even when a cooling rate is reduced, thereby reducing a load on an apparatus.

From the viewpoint of imparting moisture resistance to the sulfide solid electrolyte, it is also preferable that oxides such as SiO₂, B₂O₃, GeO₂, Al₂O₃, P₂O₅, ZrO₂, Ta₂O₅, TiO₂, and La₂O₃ are contained. These compounds may be used alone or in combination of two or more kinds thereof.

The sulfides and oxides may be contained in the present raw material, or may be added separately when the present raw material is heated and melted. An addition amount of the sulfides or oxides is preferably 0.1 mass% or more, and more preferably 0.5 mass% or more with respect to a total amount of the raw material. The addition amount is preferably 50 mass% or less, and more preferably 40 mass% or less.

The present raw material may also contain a compound that serves as a crystal nucleus, which is described later.

The present production method is particularly suitable for use when the present raw material contains a highly volatile compound. Examples of the highly volatile compound include LiI, B₂S₃, S, Se, Sb₂S₃, and P₂S₅.

### (Apparatus for Producing Sulfide Solid electrolyte)

An apparatus for producing a sulfide solid electrolyte used in the present invention (hereinafter, also referred to as the present production apparatus) is described with reference to FIG. 2. FIG. 2 is a schematic cross-sectional view showing an example of the apparatus for producing a sulfide solid electrolyte according to the embodiment of the present invention.

In FIG. 2, an apparatus 1 for producing a sulfide solid electrolyte includes a furnace 10 for heating and melting the sulfide solid electrolyte raw material, and a flow path 12 for discharging a melt 11 obtained by the heating and melting to an outside of the furnace, the flow path 12 includes a heating portion 13 for heating the flow path 12, and a cooling portion 14 for cooling the melt 11 in the vicinity of a downstream end portion of the flow path 12.

In the present production apparatus 1, a supply of the sulfide solid electrolyte raw material into the furnace 10 and a discharge of the melt 11 to the outside of the furnace 10 which is described below are preferably performed continuously, and the effect of the present invention is further enhanced when this continuous production method is adopted. The continuous supply of the sulfide solid electrolyte raw material into the furnace 10 is preferably a quantitative supply, and a method for the quantitative supply is not particularly limited, but examples thereof include methods using a screw feeder, a table feeder, and gas flow conveyance.

### (Heating and Melting)

The heating and melting of the sulfide solid electrolyte raw material is preferably performed in a gas atmosphere containing a sulfur element. The present raw material is heated and melted in the gas atmosphere containing the sulfur element, whereby sulfur is introduced into the melt. Accordingly, since volatilization of sulfur during the heating can be prevented, the composition of the obtained sulfide solid electrolyte can be appropriately controlled. The gas containing the sulfur element is, for example, a gas containing a compound containing the sulfur element or elemental sulfur, such as a sulfur gas, a hydrogen sulfide gas, and a carbon disulfide gas.

The gas atmosphere containing the sulfur element may be obtained by supplying a sulfur source to the sulfide solid electrolyte raw material or the melt and heating the sulfur source to generate a gas containing a sulfur element. By supplying the sulfur source to the sulfide solid electrolyte raw material, the sulfur source is also heated when the sulfide solid electrolyte raw material is heated and melted, so that the sulfide solid electrolyte raw material can be heated and melted in the gas atmosphere containing the generated sulfur element. Further, by supplying the sulfur source to the melt, the sulfide solid electrolyte raw material can be heated and melted in the gas atmosphere containing the generated sulfur element.

In the above-described embodiment, the sulfur source is not particularly limited as long as the sulfur source is elemental sulfur or a sulfur compound, and examples thereof include elemental sulfur, organic sulfur compounds such as hydrogen sulfide and carbon disulfide, iron sulfides (such as FeS, Fe₂S₃, FeS₂, and Fe₁₋ₓS), bismuth sulfide (Bi₂S₃), copper sulfides (such as CuS, Cu₂S, and Cu₁₋ₓS), polysulfides such as lithium polysulfide and sodium polysulfide, polysulfides, and rubber subjected to a sulfur vulcanization treatment. The sulfur source is preferably a sulfur powder.

As another method, the gas atmosphere containing the sulfur element may be obtained by introducing a sulfur vapor obtained in advance into the furnace. For example, sulfur is heated at 200°C to 450°C to generate the sulfur vapor, and an inert gas such as a N₂ gas, an argon gas, or a helium gas is transported into the furnace as a carrier gas to obtain the gas atmosphere containing the sulfur element.

A temperature for heating and melting is not particularly limited, but from the viewpoint of homogenizing the melt in a short time, the temperature is preferably 600°C or higher, more preferably 630°C or higher, still more preferably 650°C or higher, and particularly preferably 700°C or higher. The temperature for heating and melting is preferably 1,000°C or lower, more preferably 950°C or lower, still more preferably 900°C or lower, yet still more preferably 800°C or lower, and particularly preferably 750°C or lower, from the viewpoint of preventing deterioration or decomposition due to heating of the components in the melt. The temperature for heating and melting is preferably 600°C or higher and 900°C or lower, more preferably 700°C or higher and 900°C or lower, and still more preferably 700°C or higher and 750°C or lower. When the sulfide solid electrolyte raw material is heated to the above temperature, for example, the sulfide solid electrolyte raw material can be heated to the above temperature by heating portions (reference numeral 17 in FIG. 2) provided on a wall and a bottom of the furnace. The heating portion 17 of the furnace is not particularly limited, but for example, a heater that heats an object by passing a current through a heating material such as a kanthal heater, a SiC heater, or a carbon heater, a heater that performs radiation heating such as a halogen heater, a high-frequency induction heating device, or the like can be appropriately used, and a temperature in the furnace 10 can be maintained.

A time for heating and melting the raw material to obtain the melt is not particularly limited, but may be, for example, 0.5 hours or more, 1 hour or more, or 2 hours or more. As long as the deterioration and decomposition of the components in the melt caused by the heating is tolerable, the time for heating and melting may be long. As a practical range, the time is preferably 100 hours or less, more preferably 50 hours or less, and still more preferably 25 hours or less.

A pressure during the heating and melting is not particularly limited, but for example, a normal pressure or a slight pressure is preferred, and normal pressure is more preferred.

From the viewpoint of preventing side reactions with water vapor, oxygen, and the like during heating and melting, a dew point in the furnace is preferably -20°C or lower. The lower limit is not particularly limited, and is generally -80°C or more. An oxygen concentration is preferably 1,000 ppm by volume or less.

### (Discharge of Melt to Outside of Furnace)

Subsequently, the obtained melt 11 is discharged to the outside of the furnace 10 through the heated flow path 12 as shown in FIG. 2.

It is preferable that the flow path 12 can continuously discharge the melt 11 from the furnace 10, and includes a throttle portion capable of adjusting a flow rate or a flow velocity of the melt 11. That is, the flow path 12 preferably includes a throttle portion. As shown in FIG. 2, it is more preferable that the throttle portion has a nozzle shape capable of adjusting a discharge amount and a discharge rate of the melt 11 and preventing a large amount of the melt 11 from being instantaneously discharged from the furnace 10. That is, a shape of the throttle portion is preferably a nozzle shape.

Since the flow path 12 includes the throttle portion, the following effects are achieved.

Heating a discharge outlet without the throttle portion requires a large overall heat capacity and a lot of energy, but by providing the throttle portion in the flow path 12, the heat capacity can be reduced locally, so that not much energy is required. Since the heating is localized, an excessive increase in temperature of the melt 11 is prevented, and a crystal structure of the obtained sulfide solid electrolyte is easily maintained. Since the flow path 12 including the throttle portion is heated, installation of the heating portion is simplified. By providing the flow path 12 including the throttle portion near the cooling portion, the high-temperature melt 11 is rapidly cooled, and gas generation from the melt 11 is prevented. Accordingly, adhesion of an aggregation derived from the gas is prevented, and stable operation of a device is enabled; Since local temperature control is enabled, if operation of the heating portion is stopped, the melt 11 is solidified, and outflow stop operation is enabled.

The flow rate of the melt 11 passing through the flow path 12 may be determined in consideration of a scale of the present production apparatus, a type of the desired sulfide solid electrolyte, and the like, and is not particularly limited, but may be, for example, 4.0 kg/min or less. By setting the flow rate of the melt 11 passing through the flow path 12 to 4.0 kg/min or less, an amount of heat when heating the flow path 12 is prevented. For example, when a nozzle shape is adopted as the throttle portion of the flow path 12, the flow rate can be adjusted by adjusting a size of a cross section of the nozzle in a direction orthogonal to a flow direction of the melt 11.

The flow path 12 is heated by, for example, the heating portion 13 provided along the flow direction of the flow path. By this heating, the solidification of the melt 11 is prevented until the melt 11 reaches the cooling portion to be described below, and the adhesion of the aggregation derived from the gas of the melt 11 to the flow path 12 and other peripheral equipments is prevented. The heating portion 13 is not particularly limited, but for example, a heater that heats an object by passing a current through a heating material such as a kanthal heater, a SiC heater, or a carbon heater, a heater that performs radiation heating such as a halogen heater, a high-frequency induction heating device, an electric heating device, or the like can be appropriately used, and a temperature of the melt 11 flowing in the flow path 12 can be maintained at a desired temperature.

A heating temperature of the flow path 12 may be appropriately determined depending on a type of the sulfide solid electrolyte raw material, but is preferably 500°C or higher, more preferably 525°C or higher and 1000°C or lower, and still more preferably 550°C or higher and 950°C or lower.

### (Cooling of Melt)

Subsequently, the melt 11 that has passed through the flow path 12 reaches the cooling portion 14 provided in the vicinity of the downstream end portion of the flow path, and the melt 11 is cooled here.

The cooling may be performed by a known method, and the method is not particularly limited. More specific examples of the cooling method include a method of cooling a melt by pouring the melt onto an internally a water-cooled plate body of metal, carbon or ceramic; a method of pouring a melt into a water-cooled narrow gap and rapidly cooling the melt, which is typified by a twin roll process; a single roll process in which a melt is sprayed onto a rapidly rotating roll and rapidly cooled; a gas atomizing method in which a melt is poured into a gas atomization and then rapidly cooled; and a disc atomizing method in which a melt is poured onto a rotating disk. In the embodiment according to the present invention, the cooling is preferably performed by a twin roll process. Further, in another embodiment, the cooling is preferably performed by a gas atomizing method.

When the melt is poured onto a plate body and then cooled, it is preferable that a thickness of the melt after being poured and a thickness of a resulting solid are relatively thin, from the viewpoint of improving the cooling efficiency. Specifically, the thickness is preferably 10 mm or less, and more preferably 5 mm or less. A lower limit of the thickness is not particularly limited, but may be 0.01 mm or more, or may be 0.02 mm or more.

When the melt is poured into a narrow gap to be formed into a thin shape, the cooling efficiency is excellent, and a solid in a flake form, fiber form, or powder form can be obtained. The obtained solid can be obtained in any shape by being crushed into pieces of a size that is easy to handle. Among these shapes, a solid in a shape of a block is preferred since the block is easier to recover. The "block" also includes a plate-like, flake-like, and fiber-like shapes.

The cooling rate is preferably 0.01°C/sec or more, more preferably 0.05°C/sec or more, and still more preferably 0.1°C/sec or more, from the viewpoint of maintaining the composition obtained by the heating and melting. An upper limit value of the cooling rate is not particularly determined, and a cooling rate of a twin roll process in which a rapid cooling rate is generally said to be high, is 10⁷°C/sec or less.

Here, when the obtained solid is desired to be an amorphous sulfide solid electrolyte, it is preferable to obtain a solid by rapidly cooling the melt obtained by heating and melting. Specifically, the cooling rate in the case of rapid cooling is preferably 10°C/sec or more, more preferably 100°C/sec or more, still more preferably 500°C/sec or more, and even more preferably 700°C/sec or more. An upper limit value of the cooling rate is not particularly limited, and a cooling rate of a twin roll process in which a rapid cooling rate is generally said to be high, is 10⁷°C/sec or less.

On the other hand, it is also possible to obtain a sulfide solid electrolyte having a specific crystal structure or a sulfide solid electrolyte constituted by a crystal phase and an amorphous phase by performing a slow cooling during the cooling to crystallize at least a part of the solid. The cooling rate in the case of the slow cooling is preferably 0.01°C/sec or more, and more preferably 0.05°C/sec or more. Further, the cooling rate is preferably 500°C/sec or less, and more preferably 450°C/sec or less. The cooling rate may be 10°C/sec or less, or may be 5°C/sec or less. The cooling rate may be appropriately adjusted according to crystallization conditions.

Here, crystals contained in the sulfide solid electrolyte are preferably ion-conductive crystals. Specifically, the ion-conductive crystal is a crystal having a lithium-ion conductivity of more than 10⁻⁴ S/cm, and more preferably more than 10⁻³ S/cm.

When it is desired that the solid obtained after the cooling is a sulfide solid electrolyte containing a crystal phase, it is preferable that the melt obtained in the heating and melting contains a compound that serves as a crystal nucleus. Accordingly, crystals are easily precipitated during the cooling. A method for containing the compound that serves as the crystal nucleus in the melt is not particularly limited, but examples thereof include a method of adding a compound that serves as a crystal nucleus to the raw material or a heated raw material, and a method of adding a compound that serves as a crystal nucleus to the melt during heating and melting.

Examples of the compound that serves as the crystal nucleus include oxides, oxynitrides, nitrides, carbides, other chalcogen compounds, and halides. The compound that serves as the crystal nucleus is preferably a compound having a certain degree of compatibility with the melt. A compound that is completely incompatible with the melt cannot serve as the crystal nucleus.

When it is desired that the solid obtained after the cooling is a sulfide solid electrolyte containing a crystal phase, a content of the compound that serves as the crystal nucleus in the melt is preferably 0.01 mass% or more, more preferably 0.1 mass% or more, and still more preferably 1 mass% or more. On the other hand, from the viewpoint of preventing a decrease in the lithium-ion conductivity, the content of the compound that serves as the crystal nucleus in the melt is preferably 20 mass% or less, and more preferably 10 mass% or less.

If it is desired that the solid obtained after the cooling is an amorphous sulfide solid electrolyte, it is preferable that the melt does not contain any compound that serves as a crystal nucleus, or that a content of the compound is a predetermined amount or less. Specifically, the content of the compound that serves as the crystal nucleus in the melt is preferably 1 mass% or less, and more preferably 0.1 mass% or less. The content of the compound that serves as the crystal nucleus in the melt may be less than 0.01 mass%.

The present production method may further include a step of subjecting the sulfide solid electrolyte obtained by cooling the melt to a known post-treatment or the like. Examples of the post-treatment step include a step of further heat treating the sulfide solid electrolyte from the viewpoint of obtaining desired characteristics, and a step of pulverizing the sulfide solid electrolyte from the viewpoint of obtaining a desired shape.

An example in which a twin roll process is adopted as the cooling is described. The twin roll process is known, and for example, as shown in FIG. 2, the melt 11 supplied from the flow path 12 is introduced between twin rolls including water-cooled rolls 142 and 144 as the cooling portion 14, solidified between the rolls 142 and 144, and then discharged in a plate form, a flake form, or the like.

Installation locations of the rolls 142 and 144 is in the vicinity of the downstream end portion of the flow path 12, and specifically, a distance from the downstream end portion is preferably 5 mm or more and 500 mm or less, and more preferably 10 mm or more and 300 mm or less.

The sulfide solid electrolyte raw material solidified between the rolls 142 and 144 and then discharged in the plate form can be powdered as necessary.

Next, the cooling of the melt using the gas atomizing method is described.

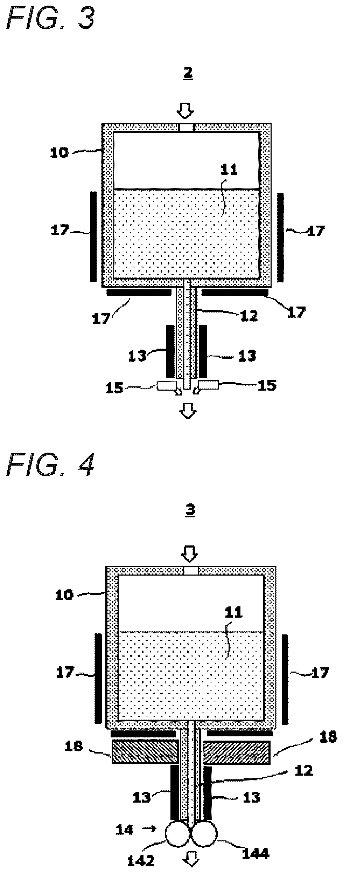

The gas atomizing method is known, and for example, as in a production apparatus 2 shown in FIG. 3, the twin rolls including the rolls 142 and 144 in FIG. 2 is replaced with a gas atomizing device 15. Conditions for preparing the melt 11 are the same as those in FIG. 2. In the gas atomizing method, as shown in FIG. 3, the obtained melt 11 is cooled and solidified by spraying a gas while discharging the melt 11 from the furnace 10 to obtain the sulfide solid electrolyte. The obtained sulfide solid electrolyte is in a powder form.

As an aspect of the gas atomizing method, for example, the gas is sprayed from the gas atomizing device 15 to the melt 11 discharged from the flow path 12, and thus the melt 11 is cooled and solidified, and powdered. Since the cooling and solidification is performed by spraying the gas onto the melt 11, the melt 11 does not come into contact with other members during the cooling, which reduces contamination with impurities and results in a sulfide solid electrolyte having excellent battery performance. Further, when the gas atomizing method is adopted, since no interfacial reaction occurs at a contact portion of the member, there are no restrictions on the members that can be used, increasing the freedom of member selection. According to the gas spraying method, since powderization can be carried out simultaneously with cooling and solidifying the melt, it is not necessary to carry out a separate powderization step. Furthermore, since a small-diameter powder can be obtained by spraying the gas and performing the cooling, the rapid cooling can be achieved. Therefore, a cooling time is shortened, a production volume increases, and a quality is also improved due to the rapid cooling. As described above, according to the gas atomizing method, it is possible to easily produce a high-quality sulfide solid electrolyte without going through complicated steps.

The gas atomizing device 15 is appropriately provided so that the gas is sprayed to the melt 11 discharged from the flow path 12.

As the gas, it is preferable to use an inert gas such as nitrogen or argon. A spraying pressure of a gas pressure is preferably 0.2 MPa or more, more preferably 0.5 MPa or more, and still more preferably 0.8 MPa or more from the viewpoint of reducing a powder grain size and decreasing a heat capacity per powder. An upper limit of the gas spraying pressure is not specifically limited, and is preferably 10 MPa or less, more preferably 9.5 MPa or less, and still more preferably 9 MPa or less, from the viewpoint of continuous operation stability and practical gas spraying cost. The spraying pressure of the gas pressure is preferably 0.2 MPa to 10 MPa, more preferably 0.5 MPa to 9.5 MPa, and still more preferably 0.8 MPa to 9 MPa. A gas velocity is not particularly limited, and may be, for example, 300 m/s or more, 350 m/s or more, or 400 m/s or more. A gas temperature is not particularly limited, but is, for example, 100°C or less, and preferably room temperature.

An oxygen concentration of the above gas may be adjusted as necessary. The oxygen concentration of the gas is preferably less than 100 ppm by volume, more preferably less than 10 ppm by volume, and still more preferably less than 1 ppm by volume. A dew point of the gas is preferably less than -30°C, more preferably less than -40°C, and still more preferably less than -50°C, as the dew point under atmospheric pressure.

The gas spraying onto the melt is preferably carried out in a sealed chamber (not shown) without exposing the melt to the atmosphere, and the obtained sulfide solid electrolyte is preferably recovered. Accordingly, it is possible to prevent a quality of the solid electrolyte from deteriorating due to a reaction of components in the atmosphere, particularly oxygen and moisture. Here, the sealed chamber means a chamber an inside of which is isolated from the atmosphere, such as a vacuum chamber or a chamber that seals a gas. A dew point in the sealed chamber is preferably less than -30°C, more preferably less than -40°C, and still more preferably less than -50°C. When the dew point in the sealed chamber is less than -30°C, a state of the interface can be maintained normally, and deterioration of the battery performance can be prevented. A lower limit of the dew point in the sealed chamber is not particularly limited as long as the dew point is within a practical range, but may be, for example, -80°C or higher. From the viewpoint of maintaining the quality of the solid electrolyte and preventing the deterioration of the battery performance, the oxygen concentration in the sealed chamber is preferably less than 100 ppm by volume, more preferably less than 10 ppm by volume, and still more preferably less than 1 ppm by volume. A lower limit of the oxygen concentration is not specifically limited, but may be 0.01 ppm by volume or more from the viewpoint of a practical operating cost.

As described above, both the twin roll process and the gas atomizing method are methods of rapidly cooling the melt, but from the viewpoint of preventing the gas generation, it is desirable that the melt is sufficiently heated immediately before being rapidly cooled.

It is preferable that an installation location of the heating portion 13 in the flow path 12 is set at a certain distance from the furnace 10 to prevent heat generated by the heating portion 13 from being transmitted to the furnace 10.

On the other hand, in the present production apparatus, it is preferable to provide a heat insulating layer between the furnace 10 and the flow path 12. Alternatively, it is preferable to provide a heat insulating layer between the furnace 10 and the heating portion 13. FIG. 4 is a schematic cross-sectional view showing another example of the apparatus for producing a sulfide solid electrolyte according to an embodiment of the present invention provided with such a heat insulating layer.

According to FIG. 4, in the configuration of the production apparatus 1 of FIG. 2, a plurality of heat insulating layers 18 are provided between the furnace 10 and the flow path 12 (heating portion 13). Due to the presence of the heat insulating layer 18, the heat generated by heating the flow path 12 can be prevented from being transmitted to the furnace 10, heating and melting conditions performed in the furnace 10 can be maintained at desired settings, and a quality of the obtained sulfide solid electrolyte is improved.

A material for the heat insulating layer 18 is not particularly limited, and examples thereof include a ceramic fiber board, a carbon fiber heat insulating material, a brick, a calcium silicate material, and a lock rule material. The heat insulating layer 18 is preferably disposed over almost the entire bottom of the furnace 10. A thickness of the heat insulating layer 18 in a direction parallel to the flow direction of the melt 11 in the flow path 12 is, for example, preferably 10 mm or more and 500 mm or less, and more preferably 20 mm or more and 250 mm or less.

The heat insulating layer 18 can be similarly provided in the production apparatus 2 shown in FIG. 3.

### (Reheating Treatment)

When the solid obtained in the cooling of the melt is an amorphous sulfide solid electrolyte or a sulfide solid electrolyte containing an amorphous phase, the present production method may further include a step of reheating the solid electrolyte. By reheating the sulfide solid electrolyte containing a sulfide solid electrolyte crystal, ions in the crystal structure can be re-arranged, thereby increasing the lithium-ion conductivity. The reheating treatment refers to at least one of heating the powder obtained by cooling for crystallization and re-arranging ions in the crystal structure.

### (Pulverizing)

The obtained sulfide solid electrolyte may be further pulverized to further reduce a particle size of the sulfide solid electrolyte. A pulverization method may be, for example, a wet pulverization method. In the case of the wet pulverization method, a type of a used solvent is not particularly limited, but since the sulfide solid electrolyte has a tendency to react with moisture and deteriorate, it is preferable to use a non-aqueous organic solvent. A type of the non-aqueous organic solvent is not particularly limited, and examples thereof include a hydrocarbon-based solvent, an organic solvent containing a hydroxy group, an organic solvent containing an ether group, an organic solvent containing a carbonyl group, an organic solvent containing an ester group, an organic solvent containing an amino group, an organic solvent containing a formyl group, an organic solvent containing a carboxy group, an organic solvent containing an amide group, an organic solvent containing a benzene ring, an organic solvent containing a mercapto group, an organic solvent containing a thioether group, an organic solvent containing a thioester group, an organic solvent containing a disulfide group, and a halogenated alkyl. Examples of the hydrocarbon-based solvent include cyclohexane, heptane, octane, and toluene, and cyclohexane, heptane, and octane are preferred from the viewpoint of a low saturated moisture concentration. From the viewpoint of adjusting the moisture concentration, it is also preferable to use a mixed solvent in which these hydrocarbon-based solvents are mixed with toluene, dibutyl ether, or the like. From the viewpoint of preventing a decrease in lithium-ion conductivity due to the sulfide solid electrolyte reacting with water during pulverization of the sulfide solid electrolyte, it is preferable that the moisture concentration of the non-aqueous organic solvent is low. The moisture concentration of the non-aqueous organic solvent may be, for example, 170 ppm by mass or less, 150 ppm by mass or less, 120 ppm by mass or less, or 100 ppm by mass or less.

The wet pulverization method may be carried out using a pulverizer such as a ball mill, a planetary ball mill, or a bead mill. In the wet pulverization, in addition to the above-mentioned solvent, an ether compound, an ester compound, or a nitrile compound may be added as an additive (dispersant).

When the solvent or the additive remains in the sulfide solid electrolyte obtained through the wet pulverization, a drying step may be carried out. A drying condition may be, for example, a temperature of 100°C or higher and 200°C or lower. A drying time is not particularly limited and may be, for example, 10 minutes or more and 24 hours or less. The drying step may be carried out under a reduced pressure, for example an absolute pressure of 50 kPa or less. The drying step can be carried out using a hot plate, a drying oven, an electric oven, or the like.

The present production method can be used for producing various solid electrolytes, and specific examples thereof are shown in Tables 1 and 2. That is, solid electrolytes described in a column of a representative composition can be produced by melting and synthesizing raw materials described in a column of a raw material in Table 1 or 2. Those shown in Tables 1 and 2 are merely examples, and the scope of application of the present invention is not limited thereto.

**[Table 1]**

| Type of solid electrolyte | Crystal type | | Representative composition | Raw material |
|---|---|---|---|---|
| Li sulfide solid electrolyte | Argyrodite | Li_{5.3}P_{0.9}S_{4.2}Cl_{0.8}Br_{0.8} | Li₆PS₅Cl | Li₂S, P₂S₅, LiCl |
| | | | Li_{5.3}P_{0.9}S_{4.2}Cl_{0.8}Br_{0.8} | Li₂S, P₂S₅, LiCl, LiBr |
| | | PS₄ tetrahedron partially substituted type (for example, high entropy) | Li_{6.5}[P_{0.25}Si_{0.25}Ge_{0.25}Sb_{0.25}]S₅I | Li₂S, P₂S₅, SiS₂ (* may be Si), GeS₂, Sb₂S₃, LiI |
| | | P atom-free argyrodite | Li_{6.75}Sb_{0.25}Si_{0.75}S₅I | Li₂S, SiS₂, Pb₂S₃, Lil |
| | LGPS type | | Li₁₀GeP₂S₁₂ | Li₂S, P₂S₅, GeS₂ |
| | | | Li₁₀SnP₂S₁₂ | Li₂S, P₂S₅, SnS₂ (* may be Sn) |
| | | | Li_{9.54}Si_{1.74}P_{1.44}S_{11.7}Cl_{0.3} | Li₂S, P₂S₅, SiS₂ (* may be Si), LiCl |
| | | | Li_{10.35}[Sn_{0.27}Si_{1.08}]P_{1.65}S₁₂ | Li₂S, P₂S₅, SnS₂, SiS₂ |
| | | | Li₁₀Ge(P₁₋ₓSbₓ)₂S₁₂ | Li₂S, P₂S₅, GeS₂, Sb₂S₃ |
| | | | Li_{9.54}[Si_{0.6}Ge_{0.4}]_{1.74}P_{1.44}S_{11.1}Br_{0.3}O_{0.6} | Li₂S, P₂S₅, GeS₂, SiS₂, LiBr |
| | LPS crystallized glass type | | Li₃PS₄ | Li₂S, P₂S₅ |
| | | | Li₇P₃S₁₁ | Li₂S, P₂S₅ |
| | | PS₄ tetrahedron partially substituted type (for example, SnS₄) | 1-x(Li₃PS₄)-xLi₄SnS₄ | Li₂S, P₂S₅, SnS₂ (* may be Sn) |
| | | BH₄ substituted type | 1-x(0.75Li₂S-0.25P₂S₅)-xLiBH₄ | Li₂S, P₂S₅, LiBH₄ |
| | LPSHa crystallized glass type | | 1-x(Li₃PS₄)-xLiHa | Li₂S, P₂S₅, LiHa |
| | | PS₄ tetrahedron partially substituted type (for example, SnS₄) | 1-y[1-x(Li₃PS₄)-xLi₄SnS₄]-yLiHa | Li₂S, P₂S₅, SnS₂ (* may be Sn), LiHa |
| | Nitrogen-doped LPS crystallized glass type | | 1-y[(0.75-1.5x)Li₂S-0.25P₂S₅)-x(Li₃N)]-yLiHa | Li₂S, P₂S₅, Li₃N (* N source may be, for example, Si₃N₄), LiHa |
| | Oxygen-doped LPS crystallized glass type | | 1-y[(0.75-x)Li₂S-0.25P₂S₅)-x(Li₂O)]-yLiHa | Li₂S, P₂S₅, Li₂O (* O source may be, for example, Li₂CO₃), LiHa |

**[Table 2]**

| Type of solid electrolyte | Crystal type | Representative composition | Raw material |
|---|---|---|---|
| Li halide solid electrolyte | Li-M-Ha-based (Octahedral) | Li₃YCl₆ | LiCl, YCl₃ |
| | | Li₃YCl₃Br₃ | LiCl, LiBr, YCl₃ |
| | Li-M-Ha Based (Monoclinic) | Li₃InCl₆ | LiCl, InCl₃ |
| | Li-M-Ha-based (Trigonal) | Li₂ZrCl₆ | LiCl, ZrCl₄ |
| Li acid halide solid electrolyte | Li-O-Ha-based (antiperovskite) | Li₃OCl | LiCl, Li₂O |
| | | Li₃OCl_{0.5}Br_{0.5} | LiCl, LiBr, Li₂O |
| Li oxide solid electrolyte | Garnet | Li₇La₃Zr₂O₁₂ | Li₂CO₃, ZrO₂, La₂O₃ |
| | | Li_{6.5}La₃Zr_{1.5}Ta_{0.5}O₁₂ | Li₂CO₃, ZrO₂, La₂O₃, Ta₂O₅ |
| | Perovskite | Li_{0.3}La_{0.57}TiO₃ | Li₂CO₃, TiO₂, La₂O₃ |
| | NASICON | LiTi₂(PO₄)₃ | Li₂CO₃, TiO₂, P₂O₅ |
| Na sulfide solid electrolyte | Cubic | Na₃PS₄ | Na₂S, P₂S₅ |
| | | Na_{2.9}PS_{3.9}Cl_{0.1} | Na₂S, P₂S₅, NaCl |
| | | Na_{2.9}Sb_{0.9}W_{0.1}S₄ | Na₂S, Sb₂S₃, WS₂ |
| Fluoride ion-conductive solid electrolyte | AE₁-_{X}M_{X}F_{2+X} (AE = Ca, Sr, Ba; M = RE) | Ba_{0.6}La_{0.4}F_{2.4} | BaF₂, LaF₂ |

### (Sulfide Solid Electrolyte)

The sulfide solid electrolyte obtained by the present production method includes a sulfide solid electrolyte containing a lithium element. Examples of the sulfide solid electrolyte obtained by the present production method include a sulfide solid electrolyte having an LGPS crystal structure such as Li₁₀GeP₂S₁₂, a sulfide solid electrolyte having an argyrodite crystal structure such as Li₆PS₅Cl, Li_{5.4}PS_{4.4}Cl_{1.6}, and Li_{5.4}PS_{4.4}Cl_{0.8}Br_{0.8}, Li-P-S-Ha-based (Ha represents at least one element selected from the halogen elements) crystallized glass; and LPS crystallized glass such as Li₇P₃S₁₁.

Examples of the sulfide solid electrolyte obtained by the present production method also include those described in Tables 1 and 2 above.

Depending on the purpose, the sulfide solid electrolyte may be an amorphous sulfide solid electrolyte, a sulfide solid electrolyte having a specific crystal structure, or a sulfide solid electrolyte including a crystal phase and an amorphous phase. The crystal phase is more preferably an argyrodite crystal phase from the viewpoint of lithium-ion conductivity.

As a sulfide solid electrolyte having excellent lithium-ion conductivity, a sulfide solid electrolyte having elements of Li-P-S-Ha is preferable, and it is more preferable that the sulfide solid electrolyte has a crystal phase. Further, in the halogen element, the halogen element is preferably derived from one or more selected from the group consisting of lithium chloride, lithium bromide, and lithium iodide.

The lithium-ion conductivity of the sulfide solid electrolyte is preferably 1.0 × 10⁻⁴ S/cm or more, more preferably 5.0 × 10⁻⁴ S/cm pr more, still more preferably 1.0 × 10⁻³ S/cm or more, and particularly preferably 5.0 × 10⁻³ S/cm or more from the viewpoint of improving the battery characteristics when used in a lithium-ion secondary battery. The lithium-ion conductivity is measured using an AC impedance measuring device (for example, potentiostat/galvanostat VSP, manufactured by Bio-Logic Sciences Instruments) under the following measurement conditions: measurement frequency: 100 Hz to 1 MHz, measurement voltage: 100 mV, measurement temperature: 25°C.

The obtained sulfide solid electrolyte can be identified by analyzing the crystal structure by X-ray diffraction (XRD) measurement, and analyzing the elemental composition using various methods such as ICP emission spectrometry, atomic absorption spectrometry, and ion chromatography. For example, P and S can be measured by ICP emission spectrometry, Li can be measured by atomic absorption spectrometry, and Ha can be measured by ion chromatography.

By performing Raman spectrum measurement, homogeneity of the composition of the sulfide solid electrolyte can be evaluated. Specifically, samples obtained from the obtained sulfide solid electrolyte is subjected to the Raman spectrum measurement at any two or more points. From the viewpoint of improving accuracy of the evaluation, the number of measurement points is preferably 8 or more, and more preferably 10 or more. Preferable conditions for the Raman spectrum measurement when evaluating the homogeneity of the composition of the sulfide solid electrolyte include a spot diameter of 3 µm and the number of 10 of the measurement points. By setting the spot diameter to 3 µm, an analysis area in the Raman spectrum measurement becomes a size suitable for evaluating the homogeneity of the composition of the sulfide solid electrolyte at a micro level.

It is believed that the smaller the variation in the peak wavenumber (peak position) derived from the structure of the sulfide solid electrolyte is, such as PS₄³⁻ in each measurement result, the more homogeneous the composition of the sulfide solid electrolyte is. Alternatively, it is believed that the smaller the variation in a full width at half maximum of the peaks derived from the structure of the sulfide solid electrolyte is, the more homogeneous the composition of the sulfide solid electrolyte is.

It is preferable to confirm peaks derived from a P-S bond as the peaks derived from the structure of the sulfide solid electrolyte, although it depends on the composition of the obtained sulfide solid electrolyte. A position of the peak derived from the P-S bond varies depending on a composition system, but typically, the position is between 350 cm⁻¹ and 500 cm⁻¹. Hereinafter, in the present specification, the variation in peak position and the variation in full width at half maximum of the peak refer to those confirmed for the most intense peak among the peaks derived from the P-S bond.

The variation in peak position can be evaluated as follows. That is, when a standard deviation of the peak positions for each measurement point obtained by the Raman spectrum measurement is calculated and the variation in peak position is expressed as (peak position average value) ± (standard deviation), a standard deviation value is preferably within 2 cm⁻¹, more preferably within 1 cm⁻¹, and still more preferably within 0.5 cm⁻¹. Here, the peak position refers to a position of a peak top. For example, when the sulfide solid electrolyte obtained by the present production method was subjected to the Raman spectrum measurement with a spot diameter of 3 µm and 10 measurement points, the standard deviation of the peak positions of the peaks derived from the P-S bond in a range of 350 cm⁻¹ to 500 cm⁻¹ for each measurement point is preferably within 2 cm⁻¹, more preferably within 1 cm⁻¹, and still more preferably within 0.5 cm⁻¹.

The variation in full width at half maximum of the peaks can be evaluated as follows. That is, the standard deviation of the full width at half maximum of the peaks for each measurement point obtained by the Raman spectrum measurement is calculated by determining the full width at half maximum of each peak and then calculating a standard deviation of the values. When the variation in full width at half maximum is expressed as (average value of full width at half maximum of peaks) ± (standard deviation), the standard deviation value is preferably within 2 cm⁻¹, and more preferably within 1.5 cm⁻¹. The full width at half maximum of the peaks herein refers to a width at which half the peak intensity of the peaks derived from the P-S bond intersects with the peaks derived from the P-S bond when the Raman spectrum is plotted. For example, when the sulfide solid electrolyte obtained by the present production method was subjected to the Raman spectrum measurement with a spot diameter of 3 µm and 10 measurement points, the standard deviation in full width at half maximum of the peaks derived from the P-S bond in a range of 350 cm⁻¹ to 500 cm⁻¹ for each measurement point is preferably within 2 cm⁻¹, and more preferably within 1.5 cm⁻¹.

The present invention is not limited to the above-described embodiments, and various modifications can be adopted within the scope of the present invention. For example, the present invention is not limited to the above-described embodiments, and may be modified and improved as appropriate. In addition, the material, shape, size, number, arrangement place, and the like of each component in the above-described embodiments are optional as long as the present invention can be achieved, and are not limited.

As described above, the present description discloses the following.
[1] A method for producing a sulfide solid electrolyte, the method including:
   supplying a sulfide solid electrolyte raw material into a furnace;
   heating and melting the sulfide solid electrolyte raw material; and
   discharging an obtained melt to an outside of the furnace through a heated flow path to perform cooling.
[2] The method for producing a sulfide solid electrolyte according to [1], in which the flow path includes a throttle portion.
[3] The method for producing a sulfide solid electrolyte according to [2], in which a shape of the throttle portion is a nozzle shape.
[4] The method for producing a sulfide solid electrolyte according to any one of [1] to [3], in which a heat insulating layer is provided between the furnace and the flow path.
[5] The method for producing a sulfide solid electrolyte according to any one of [1] to [4], in which a heating temperature of the flow path is 500°C or higher.
[6] The method for producing a sulfide solid electrolyte according to any one of [1] to [5], in which the supply of the sulfide solid electrolyte raw material into the furnace and the discharge of the melt to the outside of the furnace are continuously performed.
[7] The method for producing a sulfide solid electrolyte according to any one of [1] to [6], in which the cooling is performed by a twin roll process.
[8] The method for producing a sulfide solid electrolyte according to any one of [1] to [6], in which the cooling is performed by a gas atomizing method.
[9] An apparatus for producing a sulfide solid electrolyte, the apparatus including:
   a furnace configured to heat and melt a sulfide solid electrolyte raw material; and
   a flow path through which a melt obtained by the heating and melting is discharged to an outside of the furnace,
   in which the flow path includes a heating portion configured to heat the flow path, and a cooling portion configured to cool the melt in a vicinity of a downstream end portion of the flow path.
[10] The apparatus for producing a sulfide solid electrolyte according to [9], in which the flow path includes a throttle portion.
[11] The apparatus for producing a sulfide solid electrolyte according to [10], in which a shape of the throttle portion is a nozzle shape.
[12] The apparatus for producing a sulfide solid electrolyte according to [9] to [11], in which a heat insulating layer is provided between the furnace and the flow path.

### EXAMPLES

Hereinafter, the present invention is described in detail with reference to Examples, but the present invention is not limited thereto. Examples 1 to 3 are Inventive Examples, and Example 4 is Comparative Example.

### Example 1

A test is performed in accordance with the specification of the production apparatus 1 shown in FIG. 2.

As raw materials, powders of Li₂S (purity: 99.98%, manufactured by Sigma), P₂S₅ (purity: 99%, manufactured by Sigma), and LiCl (purity: 99.99%, manufactured by Sigma) are prepared in a molar ratio of 1.9:0.5:1.6, thereby obtaining a raw material powder.

On the other hand, a carbon crucible (furnace 10) having an internal volume of about 1 L is prepared, and a heater (heating portion 17 of the furnace) is disposed around the crucible. Nitrogen purge is performed such that a dew point inside the crucible is -60°C and an oxygen concentration is less than 100 ppm.

A quantitative feeder (Micron feeder manufactured by Aishin Nanotechnologies Co., Ltd.) is disposed at an upper portion in the crucible, and the raw material powder is set to be supplied into the crucible. A hopper tank attached to the quantitative feeder is also purged with nitrogen in the same manner such that the internal dew point is -60°C and the oxygen concentration is less than 100 ppm.

Subsequently, the raw material powder is charged into the hopper tank, and 500g of the raw material powder is supplied into the crucible. After the supply, a temperature inside the crucible is raised to heat and melt the raw material powder to obtain a melt at 700°C.

After the melt is obtained, the raw material powder is continuously supplied into the crucible at a rate of 0.1 g/sec using the quantitative feeder. At this time, a sulfur powder is added so as to be 5 mass% with respect to the melt.

On the other hand, a flow path (flow path 12) having a nozzle-shaped throttle portion and provided with a heater (heating portion 13) around the flow path is provided at a bottom of the crucible, and an internal temperature of the flow path is heated to 600°C.

After the heating of the flow path is completed, the melt is discharged from an inside of the crucible through the flow path (discharge rate = 0.1 g/sec), and is rapidly cooled by water-cooled twin rolls (rolls 142 and 144) provided 130 mm below an end portion of the flow path to obtain a sulfide solid electrolyte.

When 2 kg of the sulfide solid electrolyte is obtained, the quantitative feeder is stopped, and operation of the heater in the flow path is also stopped.

In a periphery of the flow path having the nozzle-shaped throttle portion, adhered substances derived from the gas of the melt cannot be found.

### Example 2

A test is performed in accordance with the specification of the production apparatus 2 shown in FIG. 3.

Each condition is the same as that in Example 1, but a gas atomizing method is adopted instead of rapid cooling performed by the twin rolls.

When the melt is discharged from the inside of the crucible through the flow path, the melt is rapidly cooled, solidified, and powdered under conditions of gas type: nitrogen, gas temperature: 20°C, and gas spraying pressure: 0.9 MPa to obtain a sulfide solid electrolyte.

When 2 kg of the sulfide solid electrolyte is obtained, the quantitative feeder is stopped, and operation of the heater in the flow path is also stopped.

In a periphery of the flow path having the nozzle-shaped throttle portion, adhered substances derived from the gas of the melt cannot be found.

### Example 3

A test is performed in accordance with the specification of the production apparatus 3 shown in FIG. 4.

Each condition is the same as that in Example 1, but a heat insulating layer (heat insulating layer 18) is provided between a bottom of the crucible and the flow path. As a material for the heat insulating layer, a ceramic fiber board is used. Further, the heat insulating layer is disposed over almost the entire bottom of the crucible and has a thickness of 60 mm.

When 2 kg of the sulfide solid electrolyte is obtained, the quantitative feeder is stopped, and operation of the heater in the flow path is also stopped.

In a periphery of the flow path having the nozzle-shaped throttle portion, adhered substances derived from the gas of the melt cannot be found.

### Example 4

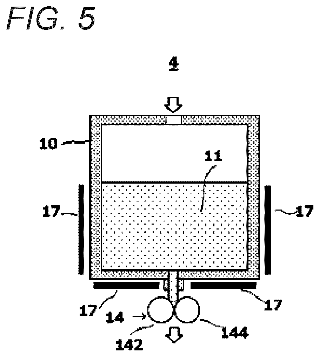

A test is performed in accordance with the specification of the production apparatus 4 shown in FIG. 5.

That is, each condition is the same as that in Example 1, but the production apparatus 4 is provided with a discharge port directly at the bottom of the crucible (furnace 10), and introduces the melt into the twin rolls without heating the discharge port.

When 2 kg of the sulfide solid electrolyte is obtained, the quantitative feeder is stopped.

Adhered substances derived from the gas of the melt are found around the discharge port.

Although the present invention has been described in detail with reference to specific embodiments, it is apparent to those skilled in the art that various changes and modifications can be made without departing from the spirit and scope of the present invention. The present application is based on a Japanese Patent Application (Japanese Patent Application No. 2022-176672) filed on November 2, 2022, the content of which is incorporated herein by reference.

### REFERENCE SIGNS LIST

1, 2, 3, 4 apparatus for producing sulfide solid electrolyte
10 furnace
11 melt
12 flow path
13 heating portion (of flow path)
14 cooling portion
142, 144 roll
15 gas atomizing device
17 heating portion (of furnace)
18 heat insulating layer

## Claims

1. A method for producing a sulfide solid electrolyte, the method comprising:
supplying a sulfide solid electrolyte raw material into a furnace;
heating and melting the sulfide solid electrolyte raw material; and
discharging an obtained melt to an outside of the furnace through a heated flow path to perform cooling.

2. The method for producing a sulfide solid electrolyte according to claim 1, wherein the flow path comprises a throttle portion.

3. The method for producing a sulfide solid electrolyte according to claim 2, wherein a shape of the throttle portion is a nozzle shape.

4. The method for producing a sulfide solid electrolyte according to claim 1 or 2, wherein a heat insulating layer is provided between the furnace and the flow path.

5. The method for producing a sulfide solid electrolyte according to claim 1 or 2, wherein a heating temperature of the flow path is 500°C or higher.

6. The method for producing a sulfide solid electrolyte according to claim 1 or 2, wherein the supply of the sulfide solid electrolyte raw material into the furnace and the discharge of the melt to the outside of the furnace are continuously performed.

7. The method for producing a sulfide solid electrolyte according to claim 1 or 2, wherein the cooling is performed by a twin roll process.

8. The method for producing a sulfide solid electrolyte according to claim 1 or 2, wherein the cooling is performed by a gas atomizing method.

9. An apparatus for producing a sulfide solid electrolyte, the apparatus comprising:
a furnace configured to heat and melt a sulfide solid electrolyte raw material; and
a flow path through which a melt obtained by the heating and melting is discharged to an outside of the furnace,
wherein the flow path comprises a heating portion configured to heat the flow path, and a cooling portion configured to cool the melt in a vicinity of a downstream end portion of the flow path.

10. The apparatus for producing a sulfide solid electrolyte according to claim 9, wherein the flow path comprises a throttle portion.

11. The apparatus for producing a sulfide solid electrolyte according to claim 10, wherein a shape of the throttle portion is a nozzle shape.

12. The apparatus for producing a sulfide solid electrolyte according to any one of claims 9 to 11, wherein a heat insulating layer is provided between the furnace and the flow path.
